# EUROPÄISCHE PATENTSCHRIFT

(11) **EP 0 491 312 B1**
(45) Veröffentlichungstag und Bekanntmachung des Hinweises auf die Patenterteilung: **30.06.1993**
(21) Anmeldenummer: 91121498.9
(22) Anmeldetag: 16.12.1991
(51) Int. Cl.: A01K 5/02

(54) **Verfahren und Fütterungseinrichtung zum Aufbereiten und Zuführen von zwei pumpfähigen Viehfuttermischungen unterschiedlicher Zusammensetzung zu Verbraucherstellen**
Method and feeding device for the preparation and the distribution of two pumpable feed mixtures of different composition to feeding places
Procédé et installation d'alimentation pour la préparation et la distribution de deux mélanges differents d'affouragement avec susceptibilité d'être pompé à des mangeoires

(30) Priorität: 18.12.1990 DE 4040450
(43) Veröffentlichungstag der Anmeldung: 24.06.1992
(73) Patentinhaber: WEDA-DAMMANN & WESTERKAMP GmbH, D-49424 Goldenstedt (DE)
(72) Erfinder: Fahlbusch, Klaus, W-2848 Vechta i.O. (DE)
(74) Vertreter: Busse & Busse Patentanwälte

(56) Entgegenhaltungen:
- EP-A- 0 126 240
- EP-A- 0 296 260
- DE-A- 3 419 842

## Beschreibung

Die Erfindung bezieht sich auf ein Verfahren und eine Fütterungseinrichtung zum Aufbereiten und Zuführen von zwei pumpfähigen Viehfuttermischungen unterschiedlicher Zusammensetzung zu Verbraucherstellen gemäß den Oberbegriffen der Ansprüche 1 und 11.

Bei einem bekannten verfahren (DE 34 19 842 A1) dieser Art wird eine erste Futtermischung mit einer ersten Rezeptur in einem Wiegemischbehälter zubereitet und aus diesem durch eine Hauptvorlaufleitung und eine von dieser beaufschlagten Verbraucherleitung portionsweise über nacheinander freigebbare Abzweigungen aus der Verbraucherleitung an Verbraucherstellen abgegeben. Nach Beendigung der Abgabe der Futtermischung mit der ersten Rezeptur wird dann im selben Wiegemischbehälter eine zweite Futtermischung mit einer zweiten Rezeptur zubereitet und danach ebenfalls aus diesem durch die Hauptvorlaufleitung und die Verbraucherleitung portionsweise über die Abzweigungen an Verbraucherstellen abgegeben.

Dabei wird eine Verdrängerflüssigkeit, z.B. Wasser, verwendet, welche die futterführenden Rohrleitungen vor Beginn und nach Abschluß eines Fütterungsvorganges füllt. Bei Beginn der Förderung von Futter aus dem Wiegemischbehälter in die Hauptvorlaufleitung verdrängt die Futtersäule fortschreitend die Verdrängerflüssigkeit, die gesammelt und nach Entleerung des Wiegemischbehälters in diesen überführt wird, um nunmehr bei weiterer Förderung die Futtersäule zu verdrängen, bis diese praktisch restlos an Verbraucherstellen abgegeben ist. Verdrängerflüssigkeit und Futter können unmittelbar aneinandergrenzen, können statt dessen jedoch auch durch Trennkörper getrennt sein, die in den futterführenden Rohrleitungen abgedichtet axialverschieblich sind (EP 0 296 250 A).

Das Verdrängen von Futter durch Verdrängerflüssigkeit und umgekehrt wird jeweils durch ein vom Pumpendruck abgeleitetes hydraulisches Druckgefälle herbeigeführt, dessen Erzeugung durch eine zentrale, computergesteuerte Schalteinheit veranlaßt wird.

Ein derartiges Verfahren ermöglicht die Zuordnung einer Futtermischung mit einer ersten Rezeptur zu Verbraucherstellen einer vorbestimmten ersten Gruppe von Verbraucherstellen und die Zuordnung einer Futtermischung mit einer zweiten Rezeptur zu einer zweiten Gruppe von Verbraucherstellen sowie die Vorgabe von Abgabemengen je Verbraucherstelle und Fütterungsvorgang, wobei Verbraucherstellen sowohl der einen als auch der anderen Gruppe angehören können.

Eine solche aus der DE 34 19 842 A1 bekannte Fütterungseinrichtung ist in der Lage, die an einer Verbraucherstelle je Fütterungsvorgang ausgegebene Futterportion zu verändern und für die Futterzusammensetzung zwei Alternativen vorzugeben.

Der Erfindung liegt die Aufgabe zugrunde, ein Verfahren und eine Fütterungseinrichtung nach den Oberbegriffen der Ansprüche 1 und 11 zu schaffen, die eine größere Anpassungsmöglichkeit der Zusammensetzung des an einer Verbraucherstelle je Fütterungsvorgang abzugebenden Futters bringt. Die Erfindung löst diese Aufgabe durch die kennzeichnenden Merkmale der Ansprüche 1 und 11. Hinsichtlich wesentlicher weiterer Ausgestaltungen des erfindungsgemäßen Verfahrens bzw. der Fütterungseinrichtung wird auf die Ansprüche 2 bis 10 bzw. 12 bis 26 verwiesen.

Das Verfahren nach der Erfindung ermöglicht es, innerhalb eines Fütterungsvorganges an einer Verbraucherstelle wahlweise eine Futtermischungsportion nur einer ersten oder nur einer zweiten Rezeptur oder eine Futterportion abzugeben, die sich aus frei wählbaren Anteilen der Futtermischung mit erster und der Futtermischung mit zweiter Rezeptur zusammensetzt. Dementsprechend kann an jeder Verbraucherstelle von Fütterungsvorgang zu Fütterungsvorgang nicht nur die abgegebene Futtermenge in Ansehung beispielsweise fortschreitenden Alters der zu fütternden Tiere oder sonstiger Gesichtspunkte, sondern auch die Zusammensetzung des Futters in weitem Bereich zur Anpassung an jeweilige Bedürfnisse verändert werden. Dabei ist durch die Möglichkeit zur unmittelbar aufeinander folgenden Abgabe von Futtermischungsportionen unterschiedlicher Rezeptur an ein und derselben Verbraucherstelle sichergestellt, daß beide Futtermischungsportionen eine weitgehend gleichmäßige und vollständige Verteilung über den für die Tiere zugänglichen Futteraufnahmebereich der Verbraucherstelle, z.B. einem Trog, auch dann erhält, wenn die Menge der Futterportion der einen Rezeptur für eine solche Verteilung zu klein ist. Denn durch die Verteilungsbewegung der größeren Portion einer Futtermischung mit der einen Rezeptur erfährt die kleinere Futtermischungsportion mit der anderen Rezeptur eine Mitnahme. Diese Transportwirkung tritt gleichgültig davon ein, ob die kleinere Portion zuerst oder nach der größeren ausgegeben wird.

Die Fütterungseinrichtung nach der Erfindung ermöglicht eine Futterabgabe je Fütterungsvorgang und Verbraucherstelle, die nicht nur hinsichtlich der Abgabmenge, sondern auch hinsichtlich der Futterzusammensetzung in einem weiten Bereich veränderbar ist. Da jeweils an einer Verbraucherstelle die gesamte je Fütterungsvorgang abzugebende Futtermenge abgegeben werden kann, bevor der Abgabevorgang an einer nachfolgenden Verbraucherstelle durchgeführt wird, ist eine gleichmäßige Verteilung selbst bei stark unterschiedlicher Futtermischungsanteilen in der Abgabegesamtportion über die gesamte Futteraufnahmefläche einer Verbraucherstelle gewährleistet und sichergestellt, daß alle Tiere im wesentlichen gleichmäßig an Futter der gewünschten Gesamtmixtur herankommen. Außerdem ist die Zeitdauer eines Fütterungsvorganges verringert, und es wird Unruhe unter den Tieren vermieden, wie sie entsteht, wenn innerhalb eines Fütterungsvorganges Futterteilmengen in zeitlich größerem Abstand aufeinanderfolgend ausgegeben werden.

Zahlreiche weitere Einzelheiten und Vorteile ergeben sich aus der nachfolgenden Beschreibung der Erfindung anhand der Zeichnung, in der ein Ausführungsbeispiel einer erfindungsgemäßen Fütterungseinrichtung in verschiedenen Betriebsphasen veranschaulicht ist. Im einzelnen zeigen:
- Fig. 1: eine Schemadarstellung einer erfindungsgemäßen Fütterungseinrichtung vor Beginn eines Fütterungsvorganges,
- Fig. 2: die Fütterungseinrichtung nach Fig. 1 nach Abschluß der Futterzubereitung und vor dem Beginn einer Futterabgabe,
- Fig. 3: die Fütterungseinrichtung nach Fig. 1 nach Vorfördern einer Teilmenge einer Futtermischung einer ersten Rezeptur in die Verbraucherleitung,
- Fig. 4: die Fütterungseinrichtung nach Fig. 1 nach Vorfördern einer Teilmenge einer Futtermischung der zweiten Rezeptur in die Verbraucherleitung und Abgabe einer ersten Futtermischungsportion an der ersten Verbraucherstelle,
- Fig. 5: die Fütterungseinrichtung nach Fig. 1 in einem Zustand bei Abgabe einer zweiten Portion der anderen Futtermischungsportion über die Abzweigung zu derselben ersten Verbraucherstelle,
- Fig. 6: eine Darstellung der Fütterungseinrichtung nach Fig. 1 in einem Zustand nach Abgabe der letzten Futterportion über die Abzweigung zur letzten Verbraucherstelle,
- Fig. 7: die Fütterungseinrichtung nach Fig. 1 nach Abschluß des Fütterungsvorganges und Rückkehr der Teile in ihre Ausgangsstellung für einen nächsten Fütterungsvorgang, und
- Fig. 8: eine vergrößerte Ausschnittdarstellung der Verbraucherleitung im Bereich einer Abzweigung.

Die in der Zeichnung in verschiedenen Betriebszuständen veranschaulichte Fütterungseinrichtung besteht im einzelnen aus zwei Futterzubereitungsstationen A und B und zwei diesen Futterzubereitungsstationen A,B jeweils zugeordneten Rohrleitungsnetzen RA und RB, die in weiter unten noch zu beschreibender Weise durch Rohrleitungen verknüpft sind.

Die Futterzubereitungsstationen A und B haben eine untereinander weitgehend übereinstimmende Ausbildung und umfassen einen Wiegemischbehälter 1a,1b, der mit einem Rührwerk 2a, 2b und bei 3a,3b mit einem Bodenauslaß versehen ist. Die Wiegemischbehälter 1a,2a stützen sich auf einer bei 4a und 4b angedeuteten gesonderten Waage ab, jedoch ist es auch möglich, beide Wiegebehälter 1a,1b auf einer gemeinsamen Waage anzubringen.

Oberhalb der Wiegemischbehälter 1a,1b sind zwei Zwischenbehälter 5a, 5b angeordnet und unabhängig abgestützt, die in ihrem oberen Bereich über eine Niveauausgleichsleitung 6 verbunden sind. An den oberen Bereich eines Zwischenbehälters 5a ist eine Überlaufleitung 7 angeschlossen, die zu einem Abfluß 8a geführt ist.

Oberhalb jedes Wiegemischbehälters 1a, 1b ist ein auf diesem abgestützter Frischwasserbehälter 9a, 9b vorgesehen, der jeweils über eine Frischwasserzulaufleitung 10a, 10b mit Frischwasser aus dem Netz beschickbar ist. Die beiden Rohrleitungssysteme RA und RB umfassen bei 11a und 12a bzw. 11b und 12b angedeutete Zuleitungen für feste und für flüssige Futterbestandteile zu den Wiegemischbehältern 1a, 1b, wobei es sich versteht, daß die Zahl derartiger Zuleitungen beliebig wählbar ist und nur davon abhängt, wieviele verschiedene Futterbestandteile im einzelnen verarbeitet und aus nicht näher dargestellten Silos zu entnehmen sind. Ferner umfassen die Rohrleitungssysteme RA, RB Zuleitungen 13a, 13b für Frischwasser zu den Zwischenbehältern 5a, 5b.

Die Rohrleitungssysteme RA, RB umfassen weiterhin je eine Hauptvorlaufleitung 14a,14b, die jeweils an den Auslaß 3a,3b eines Wiegemischbehälter 1a,1b angeschlossen und aus den Leitungsteilen 15a,16a,17a,18a,19a,20a bzw. 15b,16b,17b,18b,19b zusammengesetzt ist. Die Hauptvorlaufleitungen 14a,14b münden nebeneinander bei 24a,24b in das in der Zeichnung linke Ende einer Verbraucherleitung 25 ein, das nachfolgend als Ausgangsende bezeichnet wird. Die Verbraucherleitung 25 erstreckt sich von einem Anschlußpunkt 26 bis zu einem Anschlußpunkt 27 und umfaßt eine Anzahl von Abzweigungen, von denen lediglich beispielsweise sechs Abzweigungen 28,29,30,31,32,33 dargestellt sind. An diesen Abzweigungen münden beispielsweise je durch ein Ventil gesteuerte Fallrohre 34 od.dgl. Zuleitungen zu Verbraucherstellen 35, beispielsweise einem Trog, aus.

An ihren Enden 26,27 ist die Verbraucherleitung 25 über eine Rückführungsleitung 40a,40b wahlweise mit dem Zwischenbehälter 5a,5b, dem Wiegemischbehälter 1a,1b oder einem Abfluß 8a,8b verbindbar. Im einzelnen umfassen die Rückverbindungsleitungen Rohrleitungsabschnitte 41a,42a,43a,44a,45a,46a,47a bzw. 41b,42b,43b,44b,45b,46b,47b.

Jedes Rohrleitungssystem RA,RB umfaßt weiterhin Falleitungen 48a,48b, welche die Zwischenbehälter 5a,5b mit ihren Wiegemischbehältern 1a,1b verbinden, sowie an den Bodenbereich der Frischwasserbehälter 9a,9b angeschlossene Auslaufleitungen 50a,50b, die bei 51a,51b in die Hauptvorlaufleitung 14a,14b stromauf einer jeweils in dieser angeordneten Futterpumpe 52a,52b münden. Die Futterpumpen 52a,52b können durch eine Bypassleitung 53a,53b umgangen werden, die stromauf und stromab der Futterpumpen an die Hauptvorlaufleitung 14a,14b angeschlossen ist.

Das Rohrnetz RA weist abweichend vom Rohrnetz RB eine Zweig-Rückverbindungsleitung 55a auf, die bei 56a an die Rückverbindungsleitung 40a angeschlossen ist und bei 57a mit der Verbraucherleitung 25 verbunden ist. Das Rohrsystem RB weist im Unterschied zum Rohrsystem RA eine Zweig-Vorlaufleitung 60b auf, die aus den Abschnitten 61b,62b zusammengesetzt ist und bei 63b aus der Hauptvorlaufleitung 14b ausmündet, mit der Rückverbindungsleitung 40b einen gemeinsamen Kreuzungspunkt 64b hat und bei 65b in geringem Abstand vor dem in der Zeichnung rechten Ende 27 der Verbraucherleitung 25 an diese angeschlossen ist. Abweichend vom Rohrnetz A ist das Rohrnetz B schließlich noch mit einer Zwischenverbindungsleitung 67b versehen, die an den oberen Bereich des zugehörigen Wiegemischbehälters 1b einerseits und stromab der Futterpumpe 52b an die Hauptvorlaufleitung 14b andererseits angeschlossen ist.

Außer über die Verbraucherleitung 25 sind die Rohrsysteme RA und RB noch über eine weitere Verknüpfungsleitung 68 verknüpft, die an die eine Hauptvorlaufleitung 14a stromab deren Futterpumpe 52a und an die andere Hauptvorlaufleitung 14b stromauf deren Futterpumpe 52b angeschlossen ist.

In der Verbraucherleitung 25 deren Länge sich nach dem mit der Fütterungseinrichtung zu versorgenden Viehbestand und dessen Aufstellung in einem Stallgebäude richtet und die sich aus geraden und bogenförmigen Abschnitten zusammensetzen kann, sind drei Trennkörper 70,71 und 72 vorgesehen, die gegen die Rohrwandung abgedichtet und in der Verbraucherleitung 25 axial verschieblich sind.

Die drei Trennkörper 70,71,72 nehmen in der Betriebsstellung vor Beginn eines Fütterungsvorganges eine Ausgangsstellung nahe dem Ausgangsende 26 der Verbraucherleitung 25 mit geringem gegenseitigen Abstand ein, und in die Zwischenräume zwischen dem Mitteltrennkörper 71 und seinen benachbarten Außentrennkörpern 70,72 münden die Hauptvorlaufleitungen 14a, 14b ein. Nahe dem äußeren Stirnende des in seiner Ausgangsstellung befindlichen Außentrennkörpers 72 ist der Anschlußpunkt 57a der Zweig-Rücklaufleitung 55a gelegen.

Die Trennkörper 70,71,72 sind in ihrer Ausgangsstellung sowie in ihren verschiedenen Betriebsstellungen, auf die weiter unten noch eingegangen werden wird, jeweils hydraulisch fixierbar. Zur Auslösung einer derartigen hydraulischen Fixierung sind entlang der Verbrauchleitung Positionssensoren 80,81,82,83,84, 85,86,87,88,89 vorgesehen, wobei sich die Zahl der Positionssensoren nach der tatsächlich vorgesehenen Zahl von Verbraucherstellen 35 richtet und ein Vielfaches betragen kann. Die Positionssensoren 80,81,82 geben ein Steuersignal an eine lediglich schematisch versinnbildlichte,computergesteuerte, zentrale Schalteinheit 90 ab, wenn die Trennkörper 70,71 bzw. 72 jeweils ihre korrekte Ausgangsstellung einnehmen. Die Positionssensoren können die jeweils erfaßten Trennkörper voneinander unterscheiden und entsprechend codierte Steuersignale abgeben. Statt dessen kann die Erkennung aber auch durch das Programm erfolgen.

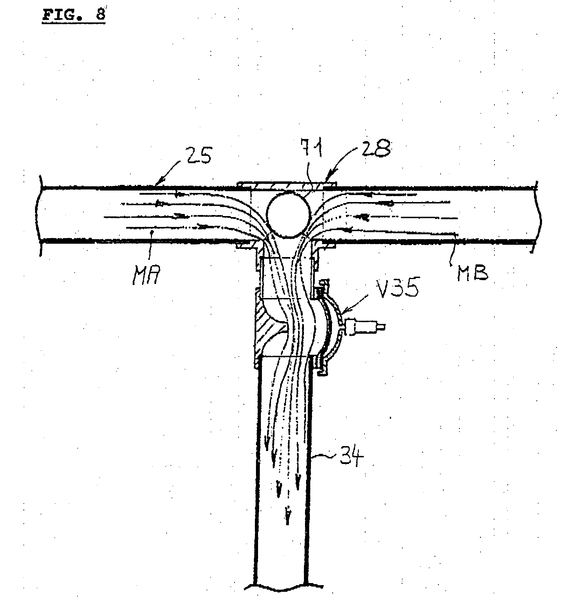

Die den Abzweigungen zu Verbraucherstellen 35 zugeordneten Positionssensoren 83 bis 88 können für die Trennkörper 70,71,72 jeweils zwei korrekte Betriebsstellungen definieren, und zwar derart, daß ein Trennkörper in einer ersten Betriebsstellung mit seinem einen Stirnende einer Abzweigung auf einer Seite dicht benachbart ist und in seiner anderen Betriebsstellung mit seinem anderen Stirnende der Abzweigung auf deren anderen Seite dicht benachbart ist. Wenn in der Zeichnung an jeder der Abzweigungen 28 bis 33 jeweils nur ein einzelner Positionssensor abgebildet ist und nicht wie möglich deren zwei, dann berücksichtigt dies eine Ausführung der Fütterungseinrichtung mit einem besonderen Mitteltrennkörper 71, wie er in Fig. 8 näher dargestellt ist, oder mit Trennkörper, die über zwei Signalkörper versehen sind.

In den Rohrleitungssystemen RA und RB sind diverse Ventile vorgesehen, deren Bezugszeichen bei einem vorgesetzten "V" mit dem Bezugszeichen für den Rohrleitungsabschnitt übereinstimmt, in dem dieses Ventil angeordnet ist. Dementsprechend verfügt die dargestellte Fütterungseinrichtung über Ventile V15a, V20a, V41a, V45a, V46a, V47a, 48a, V50a, V53a, V55a bzw. V15b, V18b, V41b, V45b, V46b, V47b, 48b, V50b, V53b, V61b, V62b sowie V35, V68 und diverse nicht dargestellte Ventile für die Steuerung der Zuleitungen 10a13a und 10b-13b.

Diese Ventile, die zur Steuerung der Fütterungseinrichtung in eine Absperr- und eine Offenstellung überführt werden können, sind über nicht näher dargestellte elektrische Verbindungsleitungen wie die bei 91 symbolisch dargestellte Verbindungsleitungen mit der zentralen Schalteinheit 90 verbunden, so daß sie durch die zentrale Schalteinheit 90 betätigbar sind. Entsprechende elektrische Leitungsverbindungen bestehen auch zwischen der zentralen Schalteinheit 90 und den Positionssensoren 80-89, den Futterpumpen 52a,52b und den Meßwertaufnehmern der Waagen 4a,4b sowie aller sonstiger Meßwertaufnehmer, die über die vorstehend genannten hinaus der Fütterungseinrichtung zugeordnet sein mögen. Die zentrale Schalteinheit 90 ist in ihrer Ausgestaltung bekannt und umfaßt einen Computer, der entsprechend einem vorgebbaren Programm den gesamten Betriebsablauf der Fütterungseinrichtung in Abhängigkeit von einer Auswertung der zugeführten Signale steuert und die Ausgabe der Steuersignale der Schalteinheit 90 veranlaßt.

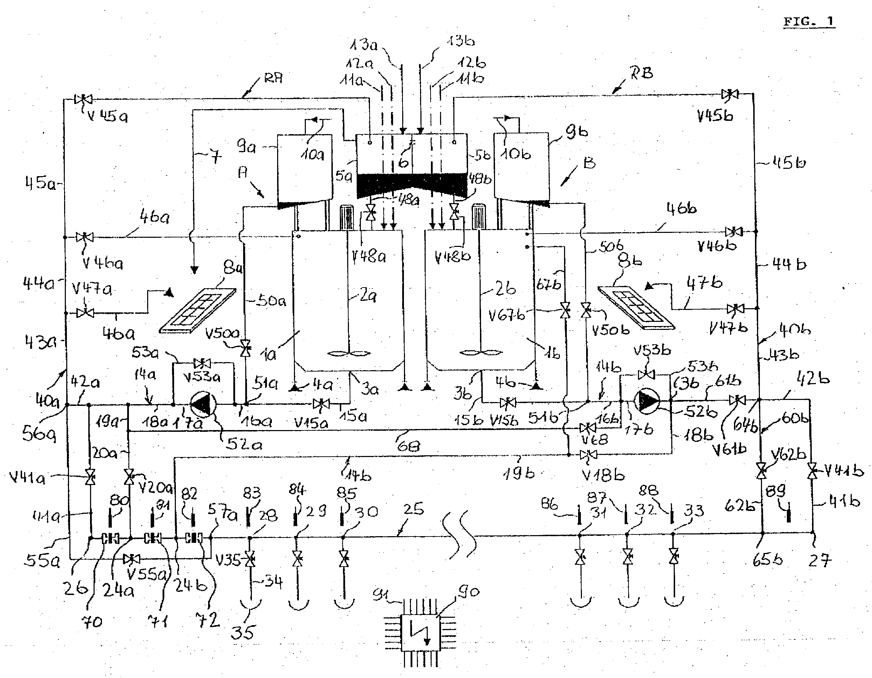

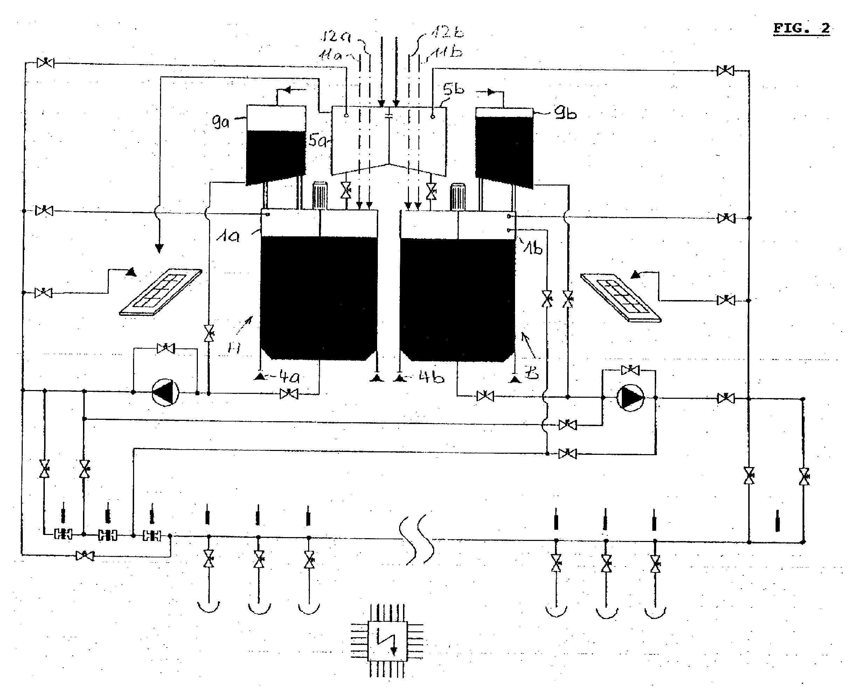

Die Fütterungseinrichtung in den Fig. 2 bis 7 unterscheidet sich von der nach Fig. 1 nur durch unterschiedliche Betriebszustände, weshalb im Interesse eines leichteren Überblicks darauf verzichtet wurde, in den Fig. 2 bis 7 sämtliche der in Fig. 1 mit einem Bezugszeichen versehenen Bauteile ebenfalls mit Bezugszeichen zu versehen. Statt dessen beschränkt sich die Bezeichnung der Bauteile mit Bezugszeichen in den Fig. 2 bis 7 auf jene, die in der nachfolgenden Erläuterung des erfindungsgemäßen Verfahrens und des Betriebsablaufes der erfindungsgemäßen Fütterungseinrichtung konkret angesprochen werden.

Im Betriebszustand gemäß Fig. 1 vor Beginn eines Fütterungsvorganges sind die beiden Wiegemischbehälter 1a, 2a leer, und auch die Frischwasserbehälter 9a,9b sind bis auf einen Rest entleert, der ein Ansaugen von Luft durch die Futterpumpe 52a verhindert. Die beiden Zwischenbehälter 5a,5b sind mit Verdrängerflüssigkeit gefüllt, wobei als Verdrängerflüssigkeit ursprünglich Frischwasser verwendet worden sein mag, das dann im Zuge des Betriebs geringe Verunreinigungen durch Futterbestandteile aus den Rohrleitungen erfahren hat. Grundsätzlich kann jedoch anstelle von Frischwasser, auch bei der Befüllung der Frischwasserbehälter 9a,9b, eine andere geeignete Flüssigkeit, z.B. Molke, Verwendung finden.

Die Waagen 4a,4b der beiden Wiegemischbehälter 1a,1b sind so eintariert, daß sie in dem Ausgangszustand gemäß Fig. 1 negative Gewichtswerte anzeigen. Die Negativwerte entsprechen dabei jeweils den Frischwassergewichten, die notwendig sind, um das Rohrleitungssystem in der weiter unten noch beschriebenen Weise aufzufüllen.

Der Fütterungsvorgang beginnt nun zunächst mit der Futterzubereitungsphase gemäß Fig. 2 und diese startet mit einem Auffüllen der beiden Frischwasserbehälter 9a,9b mit Frischwasser od.dgl. unbenutzter Flüssigkeit. Die Flüssigkeitszufuhr zu den Frischwasserbehältern 9a,9b wird jeweils dann abgeschaltet, wenn die Waage 4a,4b des zugehörigen Wiegemischbehälters 1a,1b den Nullpunkt durchläuft, d.h. ein Gewicht von +/- 0 kg anzeigt.

Fig. 2 läßt ferner erkennen, daß nach dem Befüllen der Frischwasserbehälter 9a,9b die Anmischung beider Futtermischungen mit unterschiedlicher Rezeptur in den beiden Wiegemischbehältern 1a,1b erfolgt. Die Futtermischungen haben üblicherweise einen großen Flüssigkeitsanteil, der zwischen 50 und 95% liegen kann, und zur Anmischung wird zunächst eine entsprechende Menge Flüssigkeit in die Wiegemischbehälter 1a,1b eingefüllt. Dazu wird bevorzugt die in den Zwischenbehältern 5a,5b zwischengespeicherte Verdrängerflüssigkeit benutzt, deren Menge aber in aller Regel nicht ausreicht, so daß die in die Wiegemischbehälter 1a,1b abgelassene Verdrängerflüssigkeit noch um eine zusätzliche Flüssigkeitsmenge, z.B. Frischwasser oder Molke, zu ergänzen ist. Diese zusätzliche Flüssigkeitsmenge wird bevorzugt über die Zwischenbehälter 5a,5b den Wiegemischbehältern 1a,1b zugeleitet, um auf diese Weise eine Spülung der Zwischenbehälter 5a,5b herbeizuführen.

Nach Einfüllen der rezeptgemäß vorgegebenen Flüssigkeitsmenge werden nun in die Wiegemischbehälter 1a,1b die weiteren Futterbestandteile nacheinander eingewogen, die über die Zuleitungen 11a, 12a,11b,12b zugeführt werden, und alle Futterbestandteile anschließend durchgemischt. Danach ist die Futterzubereitung in beiden Futterzubereitungsstationen A und B abgeschlossen.

Die Rohrleitungssysteme RA und RB sind zu diesem Zeitpunkt mit Frischwasser oder einer Ersatzflüssigkeit gefüllt. Dies gilt jedenfalls für die Hauptvorlaufleitungen 14a, 14b, die Rückverbindungsleitungen 40a,40b, die Zweig-Rückverbindungsleitung 55a, die Zweig-Vorlaufleitung 60b und die Verknüpfungsleitung 68.

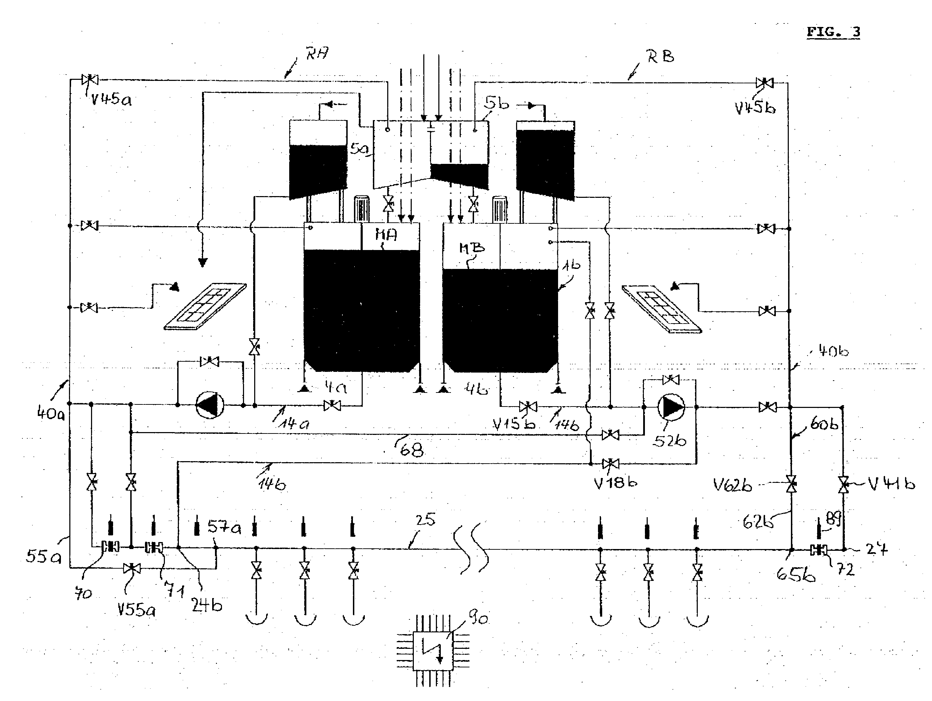

Von diesem Zustand ausgehend beginnt nun die Vorbereitungsphase für die Futterabgabe, deren erster Teil der Fig. 3 entnommen werden kann. Nach Öffnen der Ventile V15b und V18b wird durch die Hauptvorlaufleitung 14b aus dem Wiegemischbehälter 1b Futter der Futtermischung mit der Rezeptur MB durch die Futterpumpe 52b in die Verbraucherleitung 25 gefördert, und zwar solange, bis der Außentrennkörper 72 seine in Fig. 3 veranschaulichte Stellung nahe dem Ende 27 der Verbraucherleitung 25 erreicht hat.

Die in der Verbraucherleitung 25 in der Zeichnung rechts vom Außentrennkörper 72 befindliche Verdrängerflüssigkeit wird über die Rückverbindungsleitung 40b bei geöffneten Ventilen V41b und V45b in den Zwischenbehälter 5b überführt, die geschlossen werden, wenn der Trennkörper 72 seine Position gemäß Fig. 3 erreicht hat.

Die in der Hauptvorlaufleitung 14b befindliche Verdrängerflüssigkeit kann ebenfalls in Richtung des Zwischenbehälters 5a verdrängt werden, und zwar über den Rohrleitungsabschnitt 62b und die Rückverbindungsleitung 40b bei geöffneten Ventilen V62b und V45b. Sobald das Vorlaufende der Futtersäule den Anschlußpunkt 65b erreicht hat, was über die Waage 4b festgestellt werden kann, werden dann die Ventile V62b und V45b geschlossen. Zu diesem Zeitpunkt sind nunmehr die Hauptvorlaufleitung 14b und die Verbraucherleitung 25 zwischen dem Anschlußpunkt 24b und dem Außentrennkörper 72 mit Futter der Rezeptur MB gefüllt.

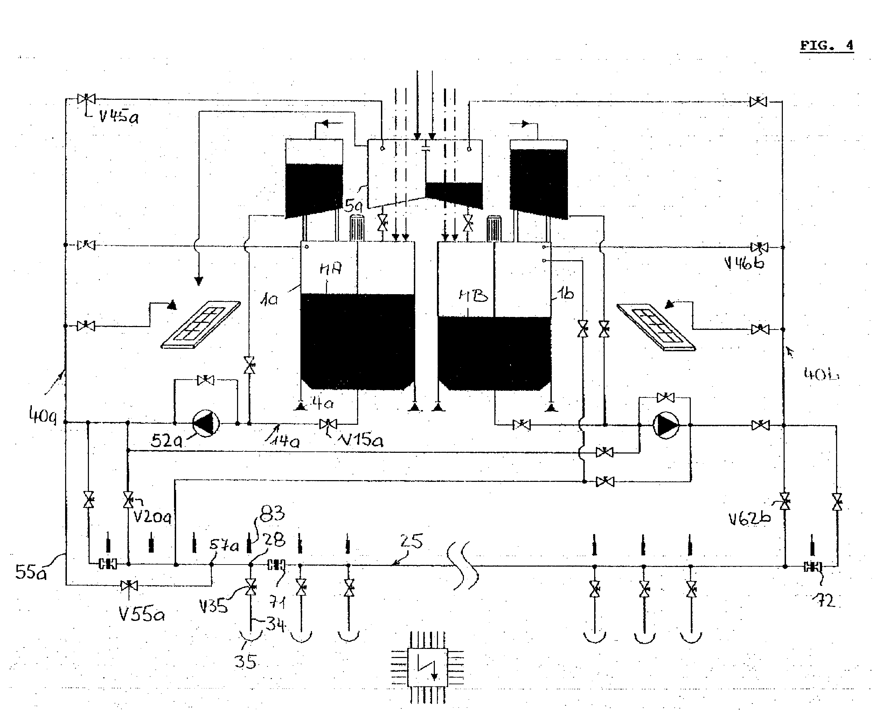

Im nachfolgenden zweiten, der Fig. 4 entnehmbaren Teil der Vorbereitungsphase wird Futter der Rezeptur MA aus dem Wiegemischbehälter 1a mittels der Futterpumpe 52a durch die Hauptvorlaufleitung 14a zur Verbraucherleitung 25 vorgefördert, zu welchem Zweck die Ventile V15a und V20a geöffnet werden und die Futterpumpe 52a eingeschaltet wird. Zugleich damit werden die Ventile V62b und V46b geöffnet, wodurch zwischen den Trennkörpern 71 und 72 in der Verbraucherleitung 25 enthaltenes Futter der Rezeptur MB zum Wiegemischbehälter 1b verdrängt werden kann, bis der Mitteltrennkörper 71 eine Stellung unmittelbar stromab, d.h. rechts von der Abzweigung 28 in Fig. 3 erreicht hat, was durch den Positionssensor 82 erfaßt wird. Durch Schließen der Ventile V62b, V46b und durch gleichzeitiges Öffnen der Ventile V55a und V45a kann dann die Verdrängerflüssigkeit in der Hauptvorlaufleitung 14a über die Zweig-Rückführungsleitung 55a und die Rückführungsleitung 40a zum Zwischenbehälter 5a hin verdrängt werden. Nach Schließen der Ventile V55a, V45a ist die Vorbereitungsphase abgeschlossen.

Durch Öffnen des Ventils V35 in der Abzweigleitung 34 zur ersten Verbraucherstelle 35 beginnt die Abgabe von Futter der Rezeptur MA zur ersten Verbraucherstelle 35 über die Abzweigung 28, und das Ventil V35 wird geschlossen, wenn die programmgemäß für diese Futtermischung und diese Verbraucherstelle vorgegebene Portion abgegeben ist. Dies kann über die Waage 4a oder auch durch ein geeignetes Durchlaufmeßgerät in der Hauptvorlaufleitung 14b oder durch eine Zeitvorgabe gesteuert werden.

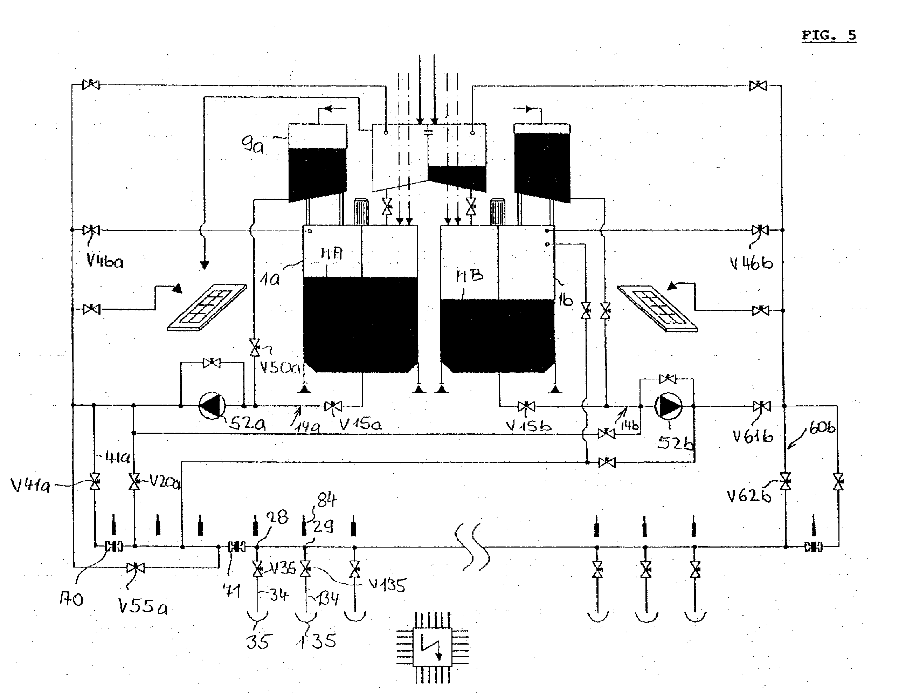

Mit dem Schließen des Ventils V35 wird die Futterpumpe 52a abgeschaltet, und die Ventile V15a und V20a werden geschlossen. Als nächstes wird nun, wie dies die Fig. 5 veranschaulicht, der Mitteltrennkörper 71 aus seiner Stellung gemäß Fig. 4 stromab der Abzweigung 28 (bezogen auf Futter der Rezeptur MA) in die Stellung gemäß Fig. 5 verschoben, in der er sich (bezogen auf Futter der Rezeptur MB) stromab derselben Abzweigung 28 zur ersten Verbraucherstelle 35 befindet. Dies geschieht durch Einschalten der Futterpumpe 52b zugleich mit einem Öffnen der Ventile V15b, V61b und V62b. Futter der Rezeptur MA in Fig. 5 links vom Mitteltrennkörper 71 wird dabei nach Öffnen der Ventile V55a und V46a in Richtung auf den Wiegemischbehälter 1a verdrängt.

Sobald der Mitteltrennkörper 71 die neue Betriebsstellung in Fig. 5 unmittelbar links von der Abzweigung 28 eingenommen hat, schließen die Ventile V55a und V46a, während das Ventil 35 in der Abzweigleitung 34 zur ersten Verbraucherstelle 35 erneut geöffnet wird und die Abgabe von Futter der Rezeptur MB zur ersten Verbraucherstelle 35 beginnt. Sobald die für diese Verbraucherstelle 35 und diesen Fütterungsvorgang vorgegebene Menge an Futter der Rezeptur MB abgegeben ist, was steuerungsmäßig genauso erfaßt werden kann, wie das oben im Zusammenhang mit der Abgabe der Futterportionder Rezeptur MA beschrieben wurde, wird das Ventil V35 geschlossen und die Futterpumpe 52b abgeschaltet. Ferner schließen die Ventile V15b, V61b und V62b.

Durch Einschalten der Futterpumpe 52a, Öffnen der Ventile V15a und V20a sowie der Ventile V62b und V46b wird nun der Mitteltrennkörper 71 stromab der Abzweigung 29 für die nächste Verbraucherstelle 135 positioniert, was durch den Positionssensor 84 angezeigt wird. Dadurch wird das Schließen der Ventile V62b und V46b und das Öffnen des Ventils V135 in der Abzweigleitung 134 zur nächsten Verbraucherstelle ausgelöst.

An der Abzweigung 29 erfolgt nun analog der vorbeschriebenen Vorgänge zunächst die Abgabe einer Portion Futter der Rezeptur MA und anschließend einer Portion Futter der Rezeptur MB, und die Vorgänge wiederholen sich, bis schließlich sämtliche vorprogrammierte Portionen Futter der Rezepturen MA und MB an allen Abzweigungen 28 bis 33 zu Verbraucherstellen abgegeben worden sind.

Kurz vor Ende des Fütterungsvorganges wird die Situation eintreten, daß die Wiegemischbehälter 1a, 1b vollständig entleert sind, gleichzeitig aber noch Futter der entsprechenden Rezeptur zur Versorgung der letzten Verbraucherstellen benötigt wird. Dieses Futter ist noch in den Rohrleitungssystemen RA und RB vorhanden, und zwar jeweils in der Hauptvorlaufleitung 14a,14b, der Zweigvorlaufleitung 60b sowie in der Verbraucherleitung 25 jeweils zwischen den Trennkörpern 70,71,72. Läuft z.B. der Wiegemischbehälter 1a als erstes leer, schließen die Ventile V15a und V20a, während das Ventil V50a geöffnet wird. Dementsprechend kann nun die Futterpumpe 52a Frischwasser aus dem Frischwasserbehälter 9a über den Rohrleitungsabschnitt 41a und das geöffnete Ventil V41a fördern und dadurch den Außentrennkörper 70 in Richtung der letzten Abzweigungen 31 bis 33 in der Verbraucherleitung 25 verschieben, wobei jeweils Futter der Rezeptur MA an Abzweigungen im oben beschriebenen Sinne abgegeben werden kann.

Läuft der Wiegemischbehälter 1b leer, werden die Ventile V15b und V62b geschlossen und die Ventile V50b und V41b geöffnet, so daß bei weiterhin offenem Ventil V61b nunmehr von der weiterlaufenden Futterpumpe 52b Frischwasser aus dem Frischwasserbehälter 9b angesaugt und dadurch der Außentrennkörper 72 in Richtung auf die letzte Abzweigung 33 in Bewegung gesetzt wird um unter Futterabgabe in seine Betriebsendstellung zu gelangen.

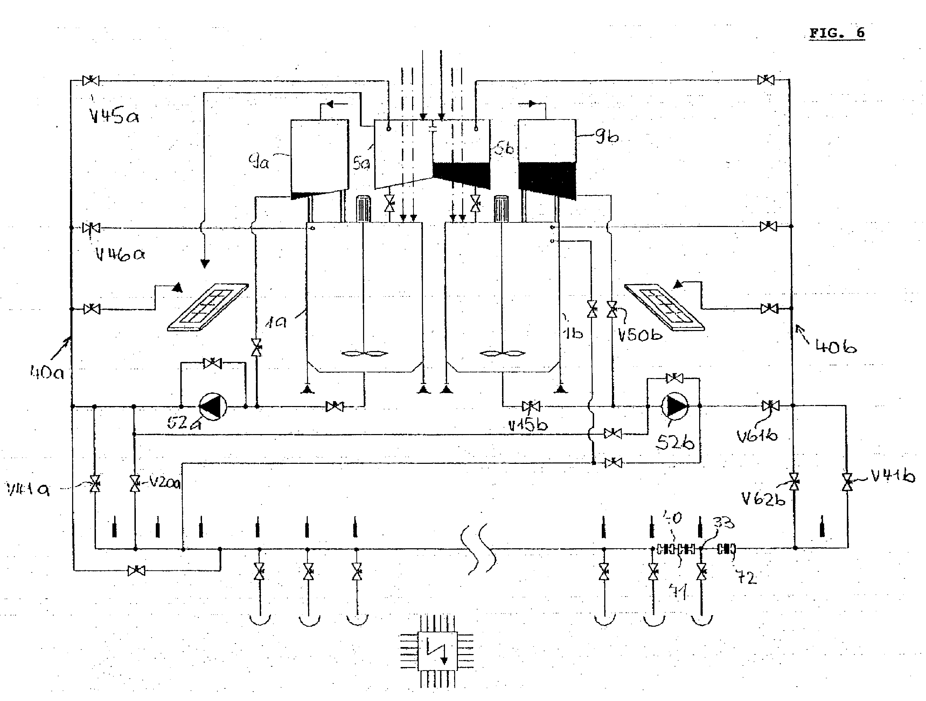

Fig. 6 veranschaulicht die Betriebsendstellung der Trennkörper 70,71,72 nach einem letzten Futterabgabevorgang und unmittelbar vor einer Rückführung der Trennkörper 70,71,72 in ihre Ausgangsstellung.

Dabei ist der Trennkörper 72 unmittelbar hinter der letzten Abzweigung 33 gelegen, und die beiden Trennkörper 72, 71 befinden sich einander dicht benachbart unmittelbar vor der Abzweigung 33. Zu diesem Zeitpunkt ist der Frischwasserbehälter 9a vollständig, der Frischwasserbehälter 9b jedoch noch nicht vollständig entleert.

Bei Schließen des Ventils in der von der Abzweigung 33 zur letzten Verbraucherstelle führenden Abzweigleitung werden die Ventile V41a und V45a geöffnet, so daß bei laufender Futterpumpe 52b sämtliche Trennkörper 70,71,72, geschoben vom Außentrennkörper 72, gemeinsam in ihre Ausgangsstellung verschoben werden. Die sich in Fig. 6 links vor dem Außentrennkörper 70 befindende Verdrängerflüssigkeit wird infolge des Vorschubs über die Ventile V41a und V45a in den Zwischenbehälter 5a verdrängt.

Sobald der Außentrennkörper 70 seine Ausgangsstellung erreicht hat, wie sie vom Positionssensor 80 definiert ist, werden die Ventile V41a und V45a geschlossen und zugleich die Ventile V20a und V46a geöffnet, so daß zwischen den Trennkörpern 70,71 noch zurückgebliebenes Restfutter der Rezeptur MA in den Wiegemischbehälter 1a verdrängt werden kann.

Sobald auch der Mitteltrennkörper 71 seine Ausgangsstellung, wie sie durch den Positionssensor 81 definiert ist, erreicht hat, schließen die Ventile V20a und V46a, während zugleich das Ventil V67b geöffnet wird. Zwischen den Trennkörpern 71,72 befindliches Restfutter der Rezeptur MB kann dementsprechend über die Rohrleitungsabschnitte 19b und 67b in den Wiegemischbehälter 1b verdrängt werden.

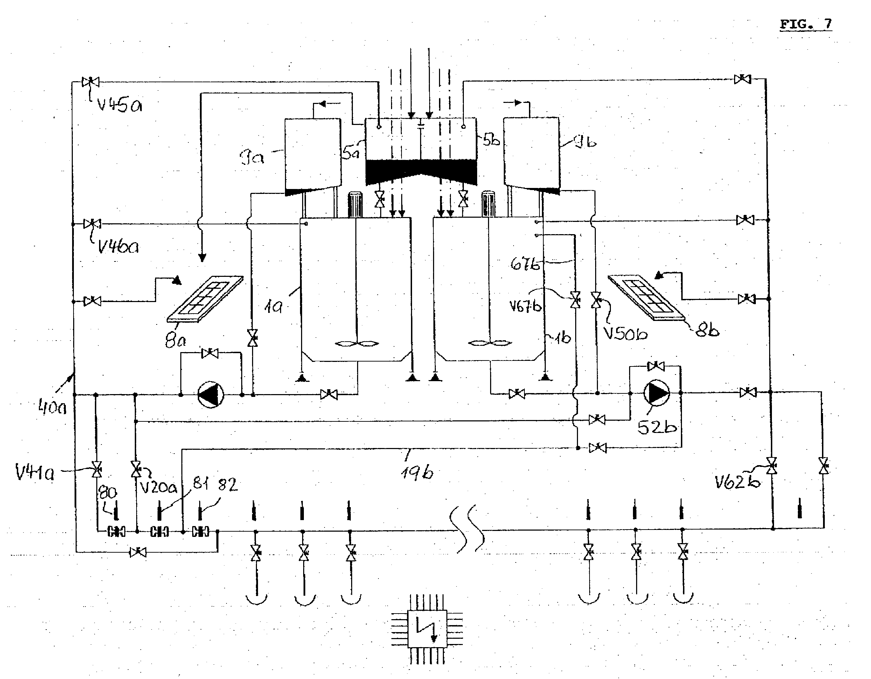

Sobald schließlich auch der Außentrennkörper 72 seine Ausgangsstellung, wie sie durch den Positionssensor 82 definiert ist, erreicht hat (Fig. 7), schließen die Ventile V50b, V62b und V67b zugleich mit einem Abschalten der Futterpumpe 52b.

Damit ist der Fütterungsvorgang beendet, und der Frischwasserbehälter 9b ist ebenso wie der Frischwasserbehälter 9a nunmehr praktisch völlig entleert.

In einem nachfolgenden Arbeitsgang besteht nun die Möglichkeit, ein vollständies Spülprogramm ablaufen zu lassen, durch das sämtliche Rohrleitungen gespült werden können. In diesem Zusammenhang können die Zwischenbehälter 5a,5b mit Verdrängungsflüssigkeit nachgefüllt werden, während die sonstige durch Spülvorgänge ersetzte Verdrängerflüssigkeit beispielsweise den Abläufen 8a,8b zugeführt werden kann.

Die Fütterungseinrichtung kann mit einer Reihe von Sonden bzw. Sensoren in unterschiedlichen Positionen entlang insbesondere der Verbraucherleitung versehen sein, die es ermöglichen, über die Trennkörper Signale an bestimmte Positionen zu übertragen und beispielsweise dadurch die Futterpumpenleistung zu steuern, etwa derart, daß gegen Ende eines Abgabevorganges die Pumpenleistung herabgesetzt wird.

Anstelle der zwar sehr genauen, aber auch recht aufwendigen Positionsermittlung der Trennkörper durch Positionssensoren ist es auch möglich, den Trennkörpern ihre jeweilige Betriebsstellung in Abhängigkeit von Meßwerten einer Durchflußmengenmessung vorzugeben, die von Durchflußmeßgeräten in den Hauptvorlaufleitungen 14a, 14b erfaßt oder von der Laufzeit der Futterpumpen 52a, 52b in den jeweiligen Förderphasen abgeleitet werden können. Dies ist sogar dann möglich, wenn anstelle von zwei Futterpumpen nur eine vorgesehen und diese beiden Hauptvorlaufleitungen zugeordnet ist. Eine solche Ausführung setzt lediglich voraus, daß beide Hauptvorlaufleitungen eine begrenzte gemeinsame, die Futterpumpe enthaltende Strecke haben und Ventile vorgesehen sind, welche abwechselnd die gemeinsame Strecke der einen oder der anderen Hauptvorlaufleitung zuordnen.

Die vorstehend beschriebene Ausführung der Fütterungseinrichtung und das im Zusammenhang mit dieser beschriebene Verfahren gehen von einem Mitteltrennkörper 71 aus, der eine im wesentlichen zylindrische Grundform hat und eine Länge aufweist, die ein Mehrfaches seiner Querschnittsabmessung beträgt. Dementsprechend kann an ein und derselben Abzweigung stets nur Futter der einen oder der anderen Rezeptur MA,MB abgegeben werden, und der Wechsel in der Abgabe setzt einen Stellungswechsel für den Mitteltrennkörper 71 voraus.

Die Fig. 8 veranschaulicht demgegenüber einen Mitteltrennkörper 71, der als Kugelkörper ausgebildet ist und in seiner in Fig. 8 veranschaulichten Mittelstellung oberhalb einer Abzweigung, z.B. der Abzweigung 28, zu einer Verbraucherstelle eine gleichzeitige Verbindung zwischen den beidseits benachbarten Bereichen der Verbraucherleitung 25 und der Abzweigleitung 34 zur Verbraucherstelle eröffnet. Dementsprechend kann bei gleichzeitig laufenden Futterpumpen 52a,52b eine gleichzeitige Abgabe von Futter der Rezeptur MA und von Futter der Rezeptur MB erfolgen, bei der sich die unterschiedlichen Futtermischungsströme vor einem Austritt an der Verbraucherstelle im Abzweigrohr 34 miteinander vermischen.

Die Mengendosierung kann mit Hilfe der in diesem Falle notwendigerweise vorhandenen zwei Futterpumpen 52a,52b erfolgen, die bevorzugt als Exzenterschneckenpumpen ausgebildet und in ihrer Förderleistung durch eine Frequenzsteuerung veränderbar sind. Exzenterschneckenpumpen haben den Vorteil, daß der Förderdruck von der Drehzahl der Exzenterschnecke weitgehend unabhängig ist und über einen weiten Drehzahlbereich konstant bleibt. Dabei ist innerhalb dieses weiten Drehzahlbereiches eine Drehzahl-Feineinstellung mit Hilfe der Frequenzsteuerung möglich, so daß die je Zeiteinheit abzugebende Futtermenge sehr genau einstellbar ist. Bevorzugt werden die beiden Exzenterschneckenpumpen mit Drehzahl angetrieben, die ein gleiches Verhältnis haben wie die von den Futterpumpen 52a,52b jeweils je Verbraucherstelle 35 abzugebenden Futterportionen. Für die gleichzeitige Futterabgabe von Futtermischungen beider Rezepturen gemäß Fig. 8 können daher beide Futterpumpen gleichzeitig über eine gleichlange Zeitspanne laufen. Infolge der gleichen Drücke verbleibt der Mitteltrennkörper 71 in seiner in Fig. 8 dargestellten mittleren Abgabestellung.

Entsprechend dieser gleichzeitigen Abgabe der vorgegebenen Futterportionen beider Rezepturen MA,MB ergibt sich ein vereinfachter Steuerungsaufwand, während sich gleichzeitig der Futterabgabevorgang nochmals verkürzt. Denn es genügt jetzt, ausgehend von der Betriebsstellung in Fig. 3 den Mitteltrennkörper 71 jeweils in eine Mittelstellung zu den Abzweigungen 28 bis 33 zu bringen, in dieser Stellung des Mitteltrennkörpers 71 die gleichzeitige Abgabe der Portionen beider Futtermischungen vorzunehmen und nach Beendigung der Futterabgabe an der letzten Verbraucherstelle die Trennkörper 70,71,72 wieder in oben beschriebener Weise in ihre Ausgangsstellung zurückzuführen. Das ständige Verschieben des Mitteltrennkörpers 71 aus einer Stellung stromab einer Abzweigung in Strömungsrichtung der einen Futtersäule in eine Stellung stromab der Abzweigung in Strömungsrichtung der anderen Futtersäule mit allen dafür erforderlichen Ventil- und Pumpensteuervorgängen kann hierbei entfallen.

## Patentansprüche

1. Verfahren zum Aufbereiten und Zuführen von zwei pumpfähigen Viehfuttermischungen unterschiedlicher Zusammensetzung zu Verbraucherstellen, bei dem
- eine erste Futtermischung mit einer ersten Rezeptur in einem Wiegemischbehälter (1a,1b) zubereitet und aus diesem durch eine Hauptvorlaufleitung (14a,14b) und eine von dieser beaufschlagten Verbraucherleitung (25) portionsweise über nacheinander freigebbare Abzweigungen aus der Verbraucherleitung an Verbraucherstellen (35) abgegeben wird,
- eine zweite Futtermischung mit einer zweiten Rezeptur in einem Wiegemischbehälter zubereitet und aus diesem durch eine Hauptvorlaufleitung und eine von dieser beaufschlagten Verbraucherleitung portionsweise über nacheinander freigebbare Abzweigungen aus der Verbraucherleitung an Verbraucherstellen abgegeben wird, und
- eine Verdrängerflüssigkeit verwendet wird, die die Rohrleitungen vor Beginn und nach Abschluß eines Fütterungsvorganges füllt und eine in der Verbraucherleitung befindliche Futtersäule verdrängt oder von dieser verdrängt wird,
- wobei im Laufe des die Abgabe beider Futtermischungen einschließenden Fütterungsvorganges Futter oder Verdrängerflüssigkeit aus der Verbraucherleitung über Rückleitungsverbindungen in den zugehörigen Wiegemischbehälter oder in einen diesem zugeordneten Zwischenbehälter zurückgefördert werden, und
- wobei das Verdrängen von Futter durch Verdrängerflüssigkeit und umgekehrt jeweils durch vom Pumpendruck abgeleitetes hydraulisches Druckgefälle herbeigeführt und dessen Erzeugung durch eine zentrale, computergesteuerte Schalteinheit veranlaßt wird,
**dadurch gekennzeichnet,** daß
- beide Futtermischungen in getrennten Wiegemischbehältern (1a,1b) gleichzeitig zubereitet werden,
- beide Futtermischungen über getrennte Hauptvorlaufleitungen (14a,14b) in eine gemeinsame Verbraucherleitung (25) gefördert werden,
- die beiden in der Verbraucherleitung befindlichen Futtersäulen an ihren einander benachbarten Enden durch einen in der Verbraucherleitung abgedichtet axialverschieblichen Mitteltrennkörper (71) voneinander und an ihren jeweils entgegengesetzten Enden durch einen ebenfalls in der Verbraucherleitung abgedichtet axialverschieblichen Außentrennkörper (70,72) von der Verdrängerflüssigkeit getrennt gehalten werden,
und
- daß durch Druckauf- und Druckabbau in der Verdrängerflüssigkeit oder in den von den Trennkörpern begrenzten Futtersäulen die Trennkörper einzeln, zu zweit oder zu dritt in vorgegebene wechselnde Betriebsstellungen verschoben und in diesen fixiert werden.

2. Verfahren nach Anspruch 1, **dadurch gekennzeichnet,** daß die drei Trennkörper aus einer Ausgangsstellung, an einem Ausgangsende (26) der Verbraucherleitung, in der sie einander dicht benachbart sind, in Betriebsstellungen verschoben werden, in denen zumindest zwischen zwei benachbarten Trennkörpern zumindest eine Abzweigung (28-33) zu einer Verbraucherstelle (35) gelegen ist.

3. Verfahren nach Anspruch 2, **dadurch gekennzeichnet,** daß für die Abgabe von Futter an eine Verbraucherstelle der Mitteltrennkörper in eine in bezug auf die Strömungsrichtung von abzugebendem Futter in der Verbraucherleitung unmittelbar stromab der zugehörigen Abzweigung gelegene Betriebsstellung verschoben wird.

4. Verfahren nach Anspruch 3, **dadurch gekennzeichnet,** daß nach Abgabe einer Portion der Futtermischung mit einer ersten Rezeptur an eine Verbraucherstelle der Mitteltrennkörper in eine der Abzweigung für die nächste Verbraucherstelle zugeordnete nächste Betriebsstellung verschoben wird.

5. Verfahren nach Anspruche 2 oder 3, **dadurch gekennzeichnet,** daß nach Abgabe einer Portion der Futtermischung mit einer ersten Rezeptur an eine Verbraucherstelle der Mitteltrennkörper in eine der anderen Seite der Abzweigung für die gleiche Verbraucherstelle benachbarte nächste Betriebsstellung verschoben und anschließend über diese Abzweigung eine Portion der Futtermischung mit einer zweiten Rezeptur an die gleiche Verbraucherstelle abgegeben wird.

6. Verfahren nach Anspruch 2, **dadurch gekennzeichnet,** daß für eine Abgabe von Futter an eine Verbraucherstelle der Mitteltrennkörper in eine Stellung zur Abzweigung überführt wird, in der am Mitteltrennkörper vorbei aus beiden benachbarten Bereichen der Verbraucherleitung Futter gleichzeitig in die Abzweigleitung übergehen kann.

7. Verfahren nach Anspruch 6, **dadurch gekennzeichnet,** daß als Mitteltrennkörper ein Kugelkörper verwendet wird.

8. Verfahren nach Anspruch 6 oder 7, **dadurch gekennzeichnet,** daß die Futtersäule in beiden beidseits des Mitteltrennkörpers in der Verbraucherleitung befindlichen Futtersäulen durch gesonderte Futterpumpen mit etwa gleichem Förderdruck beaufschlagt und jeweils in einer Menge je Zeiteinheit gefördert werden, deren Verhältnis etwa dem Verhältnis der an der Verbraucherstelle abzugebenden Portionen der Futtermischungen entspricht.

9. Verfahren nach einem der Ansprüche 1 bis 8, **dadurch gekennzeichnet,** daß nach Abgabe sämtlicher Futtermischungsportionen an die für eine Futterabgabe innerhalb eines Fütterungsvorganges vorgesehenen Verbraucherstellen die Trennkörper in ihre Ausgangslage am Ausgangsende der Verbraucherleitung zurückbewegt werden.

10. Verfahren nach einem der Ansprüche 1 bis 9, **dadurch gekennzeichnet,** daß das Erreichen korrekter Ausgangs- und Betriebsstellungen durch die Trennkörper von entlang der Verbraucherleitung angeordneten Positionssensoren an die zentrale Schalteinheit gemeldet wird.

11. Fütterungseinrichtung zum Aufbereiten und Zuführen von zwei pumpfähigen Viehfuttermischungen unterschiedlicher Zusammensetzung zu Verbraucherstellen, bestehend aus einer Futterzubereitungsstation (A;B) und aus einem an diese angeschlossenen ventilgesteuerten Rohrleitungssystem (RA;RB), wobei die Zubereitungsstation
- einen Wiegemischbehälter (1a;1b), der mit unterschiedlichen Futterbestandteilen beschickbar ist sowie ein Rührwerk (2a;2b) und einen Bodenauslauf (3a;3b) aufweist, und
- einen dem Wiegemischbehälter (1a;1b) zugeordneten, in diesen entleerbaren Zwischenbehälter (9a;9b) für die Zwischenspeicherung von Verdrängerflüssigkeit aus dem Rohrleitungssystem (RA;RB) umfaßt,
wobei das Rohrleitungssystem
- Zuleitungen (11a;12a;13a;11b;12b;13b) für Frischwasser, für feste und für flüssige Futterbestandteile zum Wiegemischbehälter (1a;1b) und zum Zwischenbehälter (5a;5b)
- eine Verbraucherleitung (25), die mit einer Anzahl von Abzweigungen (28-33) zu Verbraucherstellen (35) versehen ist,
- eine Hauptvorlaufleitung (14a;14b) mit einer dieser zugeordneten Futterpumpe (52a,52b), die an den Auslaß (3a;3b) des Wiegemischbehälters (1a;1b) und im Bereich eines Endes (26) der Verbraucherleitung (25) an diese angeschlossen ist, und
- Rückverbindungsleitungen (40a;40b) aufweist, über die die Verbraucherleitung (25) wahlweise mit dem Wiegemischbehälter (1a;1b), dem Zwischenbehälter (5a;5b) oder einem Ablauf (8) verbindbar ist, und wobei
- eine computergesteuerte zentrale Schalteinheit (90) die Futterpumpe (52a,52b) und Ventile im Rohrleitungssystem (RA;RB) betätigt und an eine Anzahl Meßwertaufnehmer für eine Programmsteuerung der Fütterungseinrichtung angeschlossen ist,
**dadurch gekennzeichnet,** daß
- die Fütterungseinrichtung zur gesonderten gleichzeitigen Zubereitung von Futtermischungen unterschiedlicher Rezeptur zwei gesonderte Futterzubereitungsstationen (A;B) sowie zwei Rohrleitungssysteme (RA;RB) umfaßt, die über eine gemeinsame Verbraucherleitung (14b) verknüpft sind,
- die Hauptvorlaufleitungen (14a;14b) der Wiegemischbehälter (1a;1b) beider Futterzubereitungsstationen (A;B) nebeneinander im Bereich eines Ausgangsendes (26) der Verbraucherleitung (25) an diese angeschlossen sind,
- die Hauptvorlaufleitung (25) einer der beiden Wiegemischbehälter (1a;1b) über eine Zweig-Vorlaufleitung (60b) zusätzlich an die Verbraucherleitung (25) im Bereich ihres anderen Endes (27) angeschlossen ist, und
- in der Verbraucherleitung (25) drei in dieser abgedichtet axialverschiebliche Trennkörper (70;71;72) vorgesehen sind, die während eines Fütterungsvorganges die beiden in der Verbraucherleitung (25) befindlichen Futtersaulen an ihren einander benachbarten Enden voneinander und die jeweils entgegengesetzten Enden der Futtersäulen von der diesen benachbarten Verdrängerflüssigkeit trennen,
- die drei Trennkörper (70;71;72) vor Beginn eines Fütterungsvorganges eine einander dicht benachbarte Ausgangsstellung am Ausgangsende (26) der Verbraucherleitung (25) einnehmen, in der jeweils einem Zwischenraum zwischen dem Mitteltrennkörper (71) und den Außentrennkörpern (70;72) einer der Anschlüsse (24a;24b) der Hauptvorlaufleitungen (14a;14b) gegenüberliegt,
- der dem Ausgangsende (26) der Verbraucherleitung (25)abgewandte Außentrennkörper zu Beginn eines Fütterungsvorganges in eine Betriebsausgangsstellung in der Verbraucherleitung (25) jenseits der Anschlußstelle (65b) der Zweig-Vorlaufleitung (60b) verschiebbar ist, und
- die Trennkörper (70;71;72) im Verlauf eines Fütterungsvorganges durch erzeugte Druckdifferenzen zwischen den Medien in unterschiedliche Betriebsstellungen bewegbar sind, in denen zumindest zwischen zwei der Trennkörper (70;71;72) zumindest eine der Abzweigungen (28-33) zu einer Verbraucherstelle (35) gelegen ist,
- und die Trennkörper (70;71;72) in ihren Betriebsstellungen durch Steuerung von Ventilen in den Rohrleitungssystemen (RA;RB) hydraulisch fixierbar sind.

12. Fütterungseinrichtung nach Anspruch 11, **dadurch gekennzeichnet,** daß unmittelbar neben einem Ende des in seiner Ausgangsstellung befindlichen, dem Ausgangsende (26) der Verbraucherleitung (25) abgewandten Außentrennkörpers (72) eine ventilgesteuerte Zweig-Rückverbindungsleitung (55a)ausmündet, die an die an das Ausgangsende (26) der Verbraucherleitung (25) angeschlossene Rückverbindungsleitung (40a) des Rohrleitungssystems (RA) einer Futterzubereitungsstation (A) angeschlossen ist.

13. Fütterungseinrichtung nach Anspruch 11 oder 12, **dadurch gekennzeichnet,** daß entlang der Verbraucherleitung (25) Positionssensoren (80-89) angeordnet sind, die das Erreichen korrekter Betriebsstellungen durch die Trennkörper (70;71;72) an die zentrale Schalteinheit (90) melden.

14. Fütterungseinrichtung nach einem der Ansprüche 11 bis 13, **dadurch gekennzeichnet,** daß jeder Hauptvorlaufleitung (14a;14b) eine gesonderte Futterpumpe (52a;52b) zugeordnet ist.

15. Fütterungseinrichtung nach Anspruch 14, **dadurch gekennzeichnet,** daß jede Hauptvorlaufleitung (14a;14b) eine die Futterpumpe (52a;52b) umgehende, ventilgesteuerte Bypassleitung (53a;53b) aufweist.

16. Fütterungseinrichtung nach einem der Ansprüche 11 bis 15, **dadurch gekennzeichnet,** daß oberhalb jedes Wiegemischbehälters (1a;1b) ein auf diesem abgestützter, an eine Frischwasserzulaufleitung (10a;10b) angeschlossener Frischwasserbehälter (9a;9b) vorgesehen ist.

17. Fütterungseinrichtung nach Anspruch 16, **dadurch gekennzeichnet,** daß jeder Frischwasserbehälter (9a;9b) über eine ventilgesteuerte bodenseitige Auslaufleitung (50a;50b) an die Hauptvorlaufleitung (14a;14b) seines Wiegemischbehälters (1a;1b) stromauf der Futterpumpe (52a;52b) angeschlossen ist.

18. Fütterungseinrichtung nach einem der Ansprüche 11 bis 17, **dadurch gekennzeichnet,** daß eine ventilgesteuerte Verknüpfungsleitung (68) an die eine Hauptvorlaufleitung (14a) stromab deren Futterpumpe (52a) und an die andere Hauptvorlaufleitung (14b) stromauf deren Futterpumpe (52b) angeschlossen ist.

19. Fütterungseinrichtung nach einem der Ansprüche 11 bis 18, **dadurch gekennzeichnet,** daß eine ventilgesteuerte Zwischenverbindungsleitung (67b) an den oberen Bereich eines Wiegemischbehälters (1b) und stromab der Futterpumpe (52b) an die zugehörige Hauptvorlaufleitung (14b) angeschlossen ist.

20. Fütterungseinrichtung nach einem der Ansprüche 11 bis 19, **dadurch gekennzeichnet,** daß die an das dem Ausgangsende (26) abgewandte Ende (27) der Verbraucherleitung (25) angeschlossene Rückverbindungsleitung (40b) und die Zweig-Vorlaufleitung (60) einen Kreuzungspunkt (64b) haben.

21. Fütterungseinrichtung nach einem der Ansprüche 11 bis 20, **dadurch gekennzeichnet,** daß die beiden Zwischenbehälter (5a;5b) in ihrem oberen Bereich über eine Niveauausgleichsleitung (6) verbunden sind und einer der beiden Zwischenbehälter (5a) in seinem oberen Bereich an eine zu einem Abfluß (8) führende Überlaufleitung (7) angeschlossen ist.

22. Fütterungseinrichtung nach einem der Ansprüche 11 bis 21, **dadurch gekennzeichnet,** daß für jeden Wiegemischbehälter (1a;1b) eine gesonderte, an die zentrale Schalteinheit (90) angeschlossene Waage (4a;4b) vorgesehen ist.

23. Fütterungseinrichtung nach einem der Ansprüche 11 bis 22, **dadurch gekennzeichnet,** daß drei oder mehr Futterzubereitungsstationen und Rohrleitungssysteme vorgesehen und die Ausläufe ihrer Wiegemischbehälter an eine gemeinsame Verteilerleitung angeschlossen sind, aus der zwei zum einen Ende der Verbraucherleitung (25) geführten Hauptvorlaufleitungen (14a;14b) ausmünden, von denen eine mit der Zweig-Vorlaufleitung (60) versehen ist.

24. Fütterungseinrichtung nach einem der Ansprüche 11 bis 23, **dadurch gekennzeichnet,** daß als Mitteltrennkörper (71) ein Formkörper vorgesehen ist, der in einer zumindest annähernd mittigen Stellung zu einer Abzweigung (28 bis 33) eine gleichzeitige Verbindung zwischen den beidseits benachbarten Bereichen der Verbraucherleitung (25) und der Abzweigleitung (34) zur Verbraucherstelle (35) eröffnet.

25. Fütterungseinrichtung nach Anspruch 24, **dadurch gekennzeichnet,** daß der Mitteltrennkörper (71) als Kugelkörper ausgebildet ist.

26. Fütterungseinrichtung nach einem der Ansprüche 11 bis 25, **dadurch gekennzeichnet,** daß als Futterpumpe(n) (52a;52b) Exzenterschneckenpumpen vorgesehen und diese durch Frequenzsteuerung in ihrer Förderleistung veränderbar sind.

## Claims

1. A method of preparing two pumpable cattle feed mixtures of different composition and of distributing them to feeding stations, wherein
- a first feed mixture to a first recipe is prepared in a mixing-weighing hopper (1a, 1b) from which it is delivered through a main flow pipe (14a, 14b) which supplies a feed pipe (25) and thence in portions to feeding stations (35) via successively openable branches from the feed pipe (25),
- a second feed mixture to a second recipe is prepared in a mixing-weighing hopper from which it is delivered through a main flow pipe which supplies a feed pipe and thence in portions to feeding stations via successively openable branches from the feed pipe, and wherein a displacement fluid is used which fills the pipes prior to commencement and following conclusion of a feeding operation and displaces or is displaced by a feed column present in the feed pipe and wherein
- during the course of the feeding process, which includes the delivery of both feed mixtures, feed or displacement fluid is fed back from the feed pipe via return flow connections to the appropriate mixing-weighing hopper or to an intermediate container associated therewith and wherein
- the displacement of feed by displacement fluid and vice versa is brought about by pressure drops derived from the pump pressure and generated by a central, computer-controlled switching unit,
characterised in that
- both feed mixtures are prepared simultaneously in separate mixing-weighing hoppers (1a, 1b),
- both feed mixtures are delivered through separate main flow pipes (14a, 14b) and into a common feed pipe (25),
- the two feed columns present in the feed pipe are at their mutually adjacent ends kept away from each other by a central separator (71) which is axially displaceable in sealing-tight manner in the feed pipe, while at their oppositely directed ends they are kept apart from the displacement fluid by an outer separator (70, 72) which is likewise axially displaceable in sealing-tight manner in the feed pipe, and in that
- by build-up and dispersal of pressure in the displacement fluid or in the feed columns defined by the separators, the separators are displaced into and fixed in twos or threes in predetermined and changing working positions.

2. A method according to Claim 1, characterised in that the three separators are displaced from a starting position at a starting end (26) of the feed pipe in which they are closely adjacent one another, into working positions in which at least one branch (28-33) to a feeding station (35) is situated between two adjacent separators.

3. A method according to Claim 2, characterised in that for the delivery of feed to a feeding station the central separator is displaced in the feed pipe to a working position situated immediately downstream of the associated branch in relation to the direction of flow of feed which is to be delivered.

4. A method according to Claim 1, characterised in that after delivering a portion of feed mixture to a first recipe to a feeding station the central separator is displaced into the nearest working position associated with the branch for the next feeding station.

5. A method according to Claim 2 or 3, characterised in that after delivering a portion of feed mixture to a first recipe to a feeding station the central separator is displaced into a nearest working position adjacent the other side of the branch for the same feeding station and in that then a portion of feed mixture to a second recipe is delivered to the same feeding station through the said branch.

6. A method according to Claim 1 or 2, characterised in that for delivering a feed to a feeding station the central separator is moved into a position in relation to the branch at which feed from both adjacent portions of the feed pipe can pass the central separator simultaneously and move into the branch pipe.

7. A method according to Claim 6, characterised in that a spherical body is used as the central separator.

8. A method according to Claim 8 or 7, characterised in that the column of feed in both feed columns present in the feed pipe on both sides of the central separator are subject to the action of separate feed pumps running at substantially the same delivery pressure and are in each case delivered in a quantity per unit of time the proportion of which corresponds substantially to the proportion of the portions of feed mixtures to be delivered to the feeding station.

9. A method according to one of Claims 1 to 8, characterised in that after delivery of all feed mixture portions to those feeding stations to which feed is to be delivered within one feeding cycle, the separators are moved back to their starting positions at the starting end of the feed pipe.

10. A method according to one of Claims 1 to 9, characterised in that the attainment of correct starting and working positions by the separators is communicated to the central switching unit by position sensors disposed along the feed pipe.

11. A feeding installation for preparing two pumpable cattle feed mixtures of different compositions and for distributing them to feeding stations, consisting of a feed preparation station (A, B) and, connected thereto, a valve-controlled system of pipelines (RA, RB), the preparation station comprising
- a mixing-weighing hopper (1a, 1b) which can be charged with different feed constituents and with an agitator mechanism (2a, 2b) and a bottom discharge (3a, 3b) and
- associated with and adapted to be emptied into the mixing-weighing hopper (1a, 1b) an intermediate container (9a, 9b) for the interim storage of displacement fluid from the pipeline system (RA, RB), in which the pipeline system comprises
- supply lines (11a, 12a, 13a; 11b, 12b, 13b) for fresh water, for solid and for liquid feed constituents and extending to the mixing-weighing hopper (1a, 1b) and to the intermediate container (5a, 5b),
- a feed pipe (25) provided with a number of branch pipes (28-33) to feeding stations (35),
- a main flow pipe (14a, 14b) with, associated therewith, a feed pump (52a, 52b) connected to the outlet (3a, 3b) from the mixing-weighing hopper (1a, 1b) and connected to the feed pipe (25) at the region of one of its ends (26), and
- return connecting pipes (40a, 40b) through which the feed pipe (25) can be connected optionally to the mixing-weighing hopper (1a, 1b), the intermediate container (5a, 5b) or an outlet (8), and in which
- a computer-controlled central switching unit (90) actuates the feed pump (52a, 52b) and valves in the pipeline system (RA, RB) and is connected to a number of measured value recorders for programme control of the feeding installation,
characterised in that
- for separate simultaneous preparation of feed mixtures of different recipes, the feeding installation comprises two separate feed preparation stations (A, B) and two pipeline systems (RA, RB) which are linked by a common feed pipe (14b),
- the main flow pipe (14a, 14b) of the mixing-weighing hoppers (1a, 1b) of both feed preparation stations (A, B) are adjacently connected to the feed pipe (25) in the region of one outlet end (26) thereof,
- the main flow pipe (25) of one of the two mixing-weighing hoppers (1a, 1b) is additionally connected to the feed pipe (25) in the region of its other end (27) and
- there are in the feed pipe (25) and guided for axial displacement therein in sealing-tight fashion three separators (70, 71, 72) which during one feeding cycle separate the two feed columns present in the feed pipe (25) from each other at their mutually adjacent ends and, at the respective oppositely directed ends of the feed columns, they separate these latter from the adjacent displacement fluid,
- prior to commencement of a feeding process, the three separators (70, 71, 72) assume at the starting end (26) of the feed pipe (25), closely adjacent starting positions in which in each case an intermediate space between the central separator (71) and the outer separators (70, 72) is disposed opposite one of the connections (24a, 24b) of the main feed pipes (14a, 14b),
- the outer separator which is remote from the starting end (26) of the feed pipe (25) can at the commencement of a feeding operation be displaced into a work commencement position in the feed pipe (25) which is beyond the junction (65b) of the branch pipe and the flow pipe (60b) and
- during the course of one feeding cycle, the separators (70, 71, 72) are adapted to be moved into different working positions as the result of pressure differences created between the media, and in which at least one of the branches (28-33) to a feed pipe (35) is situated between two of the separators (70, 71, 72),
- and the separators (70, 71, 72) can be hydraulically fixed in their working positions by the control of valves in the pipeline systems (RA, RB).

12. A feeding installation according to Claim 11, characterised in that immediately adjacent one end of the outer separator (72) which is in its starting position and remote from the starting end (26) of the feed pipe (25) there is a discharge point of a valve-controlled branch-return connecting pipe (55a) which is connected to the return connection pipe (40a) of the pipeline system (RA) of a feed preparation station (A) and which is connected to the starting end (26) of the feed pipe (25).

13. A feeding installation according to Claim 11 or 12, characterised in that along the feed pipe (25) there are position sensors (80-89) which communicate to the central switching unit (90) that the separators (70, 71, 72) have reached their correct working positions.

14. A feeding installation according to one of Claims 11 to 13, characterised in that a separate feed pump (52a, 52b) is associated with each main flow pipe (14a, 14b).

15. A feeding installation according to Claim 14, characterised in that each main flow pipe (14a, 14b) has a valve-controlled bypass pipe (53a, 53b) which bypasses the feed pump (52a, 52b).

16. A feeding installation according to one of Claims 11 to 15, characterised in that above and supported on each mixing-weighing hopper (1a, 1b) is a fresh water tank (9a, 9b) connected to a fresh water supply line (10a, 10b).

17. A feeding installation according to Claim 16, characterised in that each fresh water tank (9a, 9b) is connected by a valve-controlled bottom outlet pipe (50a, 50b) to the main flow pipe (14a, 14b) of its mixing-weighing hopper (1a, 1b) upstream of the feed pump (52a, 52b).

18. A feeding installation according to one of Claims 11 to 17, characterised in that a valve-controlled linking pipe (68) is connected to one main flow pipe (14a) downstream of its feed pump (52a) and to the other main flow pipe (14b) upstream of its feed pump (52b).

19. A feeding installation according to one of Claims 11 to 18, characterised in that a valve-controlled intermediate connecting pipe (67b) is connected to the upper portion of a mixing-weighing hopper (1b) and downstream of the feed pump (52b) is connected to the associated main flow pipe (14b).

20. A feeding installation according to one of Claims 11 to 19, characterised in that the return connection pipe (40b) which is connected to that end (27) of the feed pipe (25) which is remote from the starting end (26) intersects with the branch-flow pipe (60) at the location (64b).

21. A feeding installation according to one of Claims 11 to 20, characterised in that the two intermediate containers (5a, 5b) are connected in their upper parts by a level equalising pipe (6) and in that one of the two intermediate containers (5a) is in its upper portion connected to a transfer pipe (7) which leads to an outlet (8).

22. A feeding installation according to one of Claims 11 to 21, characterised in that a separate weighing means (4a, 4b) is connected to the central switching unit (90) and for each mixing-weighing hopper (1a, 1b).

23. A feeding installation according to one of Claims 11 to 22, characterised in that three or more feed preparation stations and pipeline systems are provided, the outlets from their mixing-weighing hoppers being connected to one common distributing pipe from which emerge two main flow pipes (14a, 14b) which extend to one end of the feed pipe (25) and of which one is provided with the branch-flow pipe (60).

24. A feeding installation according to one of Claims 11 to 23, characterised in that provided as the central separator (71) is a shaped body which in an at least approximately central position in relation to a branch (28-33) opens up a simultaneous connection between the portions of feed pipe (25) which are adjacent both sides and the branch pipe (34) to the feeding station (35).

25. A feeding installation according to Claim 24, characterised in that the central separator (71) is constructed as a spherical body.

26. A feeding installation according to one of Claims 11 to 25, characterised in that eccentric screw pumps are provided as the feed pumps (52a, 52b) and in that their rate of delivery can be varied by frequency control.

## Revendications

1. Procédé pour la préparation et la distribution dans des mangeoires de deux mélanges d'aliments pour bétail pompables et de compositions différentes, dans lequel :
- un premier mélange d'aliments d'une première composition est préparé dans un réservoir de pesée et de mélange (1a, 1b) et est évacué de celui-ci pour être distribué par rations dans des mangeoires (35) via un collecteur principal (14a, 14b), une conduite de distribution (25) alimentée par ce collecteur et des branchements de la conduite de distribution (25) pouvant être ouverts successivement,
- un second mélange d'aliments d'une seconde composition est préparé dans un réservoir de pesée et de mélange (1a, 1b) et est évacué de celui-ci pour être distribué par rations dans des mangeoires (35) via un collecteur principal (14a, 14b), une conduite de distribution alimentée par ce collecteur et des branchements de la conduite de distribution (25) pouvant être ouverts successivement, et
- un liquide de poussée est utilisé, qui remplit les conduites avant le début et après la fin d'une opération d'alimentation et repousse une colonne d'aliments située dans la conduite de distribution ou est repoussé par celle-ci,
- étant entendu qu'au cours de l'opération d'alimentation comprenant la distribution des deux mélanges d'aliments, des aliments ou du liquide de poussée sont renvoyés de la conduite de distribution via des conduites de retour dans le réservoir de pesée et de mélange associé ou dans un réservoir intermédiaire associé à ce réservoir de pesée et de mélange,
- et que le refoulement des aliments par le liquide de poussée et vice versa est effectué par une différence de pression hydraulique créée par une pompe commandée par une unité de commutation centrale contrôlée par ordinateur,
caractérisé en ce que :
- les deux mélanges d'aliments sont préparés simultanément dans des réservoirs de pesée et de mélange (1a, 1b) distincts,
- les deux mélanges d'aliments sont refoulés dans une conduite de distribution (25) commune via des collecteurs principaux (14a, 14b) distincts,
- les deux colonnes d'aliments situées dans la conduite de distribution sont maintenues séparées l'une de l'autre à leurs extrémités voisines l'une de l'autre par un élément séparateur médian (71) étanche et déplaçable axialement dans la conduite de distribution et sont maintenues séparées du liquide de poussée à chacune de leurs extrémités respectivement opposées par un élément séparateur extérieur (70, 72) également étanche et déplaçable axialement dans la conduite de distribution, et en ce que :
- les éléments séparateurs sont déplacés et maintenus individuellement, à deux ou à trois dans une succession de positions de travail variables prédéfinies par l'augmentation ou la diminution de la pression dans le liquide de poussée ou dans les colonnes d'aliments délimitées par les éléments séparateurs.

2. Procédé selon la revendication 1, caractérisé en ce que les trois éléments séparateurs sont déplacés depuis une position de départ située à une extrémité de départ (26) de la conduite de distribution et dans laquelle ils sont proches les uns des autres vers des positions de travail dans lesquelles, entre au moins deux éléments séparateurs voisins, est situé au moins un branchement (28-33) conduisant à une mangeoire (35).

3. Procédé selon la revendication 2, caractérisé en ce que pour la distribution d'aliments dans une mangeoire, l'élément séparateur médian est déplacé dans une position de travail située dans la conduite de distribution immédiatement en aval, dans le sens de l'écoulement de l'aliment à distribuer, du branchement associé à cette mangeoire.

4. Procédé selon la revendication 3, caractérisé en ce qu'après la distribution d'une ration du mélange d'aliments d'une première composition dans une mangeoire, l'élément séparateur médian est déplacé dans une position de travail suivante associée au branchement destiné à la mangeoire suivante.

5. Procédé selon l'une des revendications 1 à 3, caractérisé en ce qu'après distribution d'une ration de mélange d'aliments d'une première composition dans une mangeoire, l'élément séparateur médian est déplacé dans une position de travail suivante proche de l'autre côté du branchement destiné à la même mangeoire et qu'ensuite une ration du mélange d'aliments d'une seconde composition est distribuée dans la même mangeoire via ce branchement.

6. Procédé selon la revendication 1 ou 2, caractérisé en ce que pour une distribution d'aliments dans une mangeoire, l'élément séparateur médian est amené dans une position par rapport au branchement dans laquelle des aliments provenant des deux zones voisines de la conduite de distribution peuvent passer simultanément dans la conduite de branchement en franchissant l'élément séparateur médian.

7. Procédé selon la revendication 6, caractérisé en ce qu'on utilise un élément sphérique à titre d'élément séparateur médian.

8. Procédé selon la revendication 6 ou 7, caractérisé en ce que les deux colonnes d'aliments situées dans la conduite de distribution de part et d'autre de l'élément séparateur médian sont alimentées par des pompes à aliments distinctes produisant sensiblement la même pression de refoulement et sont repectivement refoulées en des quantités par unité de temps dont le rapport correspond sensiblement au rapport des rations de mélanges d'aliments à distribuer dans les mangeoires.

9. Procédé selon l'une des revendications 1 à 8, caractérisé en ce qu'après la distribution de toutes les rations de mélanges d'aliments dans les mangeoires qui doivent être alimentées au cours d'une opération d'alimentation, les éléments séparateurs sont renvoyés dans leur position de départ à l'extrémité de départ de la conduite de distribution.

10. Procédé selon l'une des revendications 1 à 9, caractérisé en ce que le positionnement correct des éléments séparateurs dans leurs positions de départ et de travail est transmis à l'unité centrale de commutation par des capteurs de position disposés le long de la conduite de distribution.

11. Installation d'alimentation de bétail pour la préparation et la distribution dans des mangeoires de deux mélanges d'aliments pour bétail pompables et de compositions différentes, consistant en un poste de préparation d'aliments (A; B) et en un système de conduites (RA; RB) raccordé à ce poste de préparation et commandé par vannes, étant entendu que le poste de préparation :
- comporte un réservoir de pesée et de mélange (1a; 1b) qui peut être alimenté des différents composants de mélanges d'aliments ainsi qu'un agitateur (2a; 2b) et une sortie par le fond (3a; 3b), et
- comprend un réservoir intermédiaire (9a; 9b) associé au réservoir de pesée et de mélange (1a; 1b) et pouvant se vider dans celui-ci, pour la mise en réserve provisoire du liquide de poussée provenant du système de conduites (RA; RB), étant entendu que le système de conduites comporte des conduites d'alimentation (11a; 12a; 13a; 11b; 12b; 13b) pour amener l'eau fraîche, les composants solides et composants liquides de l'aliment au réservoir de pesée et de mélange (1a; 1b) et au réservoir intermédiaire (5a; 5b),
- une conduite de distribution (25) dotée de plusieurs branchements (28-33) conduisant à des mangeoires (35),
- un collecteur principal (14a; 14b) auquel est associée une pompe à aliments (52a; 52b) qui est raccordée à la sortie (3a; 3b) du réservoir de pesée et de mélange (1a; 1b) et à la conduite de distribution (25) dans la zone voisine d'une extrémité (26) de celle-ci,
- et des conduites de retour (40a; 40b) par l'intermédiaire desquelles la conduite de distribution (25) peut être raccordée au choix au réservoir de pesée et de mélange (1a; 1b), au réservoir intermédiaire (5a; 5b) ou à un égout (8), et étant entendu que :
- une unité centrale de commutation (90) commandée par ordinateur actionne les pompes à aliments (52a; 52b) et des vannes des systèmes de conduites (RA; RB) et est raccordée à plusieurs enregistreurs de valeurs de mesure en vue d'une commande programmée de l'installation d'alimentation de bétail,
caractérisée en ce que :
- l'installation d'alimentation de bétail comprend, pour la préparation simultanée et séparée de mélanges d'aliments de compositions différentes, deux postes distincts de préparation d'aliments (A; B) ainsi que deux systèmes de conduites (RA; RB) qui sont reliés par l'intermédiaire d'une conduite de distribution (25) commune,
- les collecteurs principaux (14a; 14b) des réservoirs de pesée et de mélange (1a; 1b) des deux postes de préparation d'aliments (A; B) sont raccordés à la conduite de distribution (25) l'un à côté de l'autre dans la zone d'une extrémité de départ (26) de cette conduite de distribution (25),
- le collecteur principal (14b) d'un des deux réservoirs de pesée et de mélange (1a; 1b) est, en outre, raccordé par l'intermédiaire d'une dérivation de collecteur (60b) à la conduite de distribution (25) au voisinage de son autre extrémité (27), et
- trois éléments séparateurs (70; 71; 72) étanches et pouvant se déplacer axialement sont prévus dans la conduite de distribution (25) et séparent pendant une opération d'alimentation, d'une part, les deux colonnes d'aliments situées dans la conduite de distribution (25) au niveau de leurs extrémités voisines, et, d'autre part, chacune des extrémités opposées des colonnes d'aliments du liquide de poussée voisin de ces extrémités,
- les trois éléments séparateurs (70; 71; 72) occupent le début d'une opération d'alimentation, des positions de départ très proches les unes des autres à l'extrémité de départ (26) de la conduite de distribution (25), dans lesquelles un des points de raccordement (24a; 24b) des collecteurs principaux (14a; 14b) est situé dans l'espace séparant l'élément séparateur médian (71) et les éléments séparateurs extérieurs (70; 72),
- au début d'une opération d'alimentation, l'élément séparateur extérieur éloigné de l'extrémité de départ (26) de la conduite de distribution (25) peut être déplacé dans la conduite de distribution (25) vers une position de travail de départ située au-delà du point de raccordement (65b) de la dérivation de collecteur (60b),
- au cours d'une opération d'alimentation, les éléments séparateurs (70; 71; 72) peuvent être déplacés par les différences de pression créées entre les milieux, dans différentes positions de travail, dans lesquelles au moins un des branchements (28-33) conduisant à une mangeoire (35) est situé au moins entre deux des éléments séparateurs (70; 71; 72), et
- dans leurs positions de travail, les éléments séparateurs (70; 71; 72) peuvent être immobilisés hydrauliquement par actionnement de vannes dans les systèmes de conduites (RA; RB).

12. Installation d'alimentation de bétail selon la revendication 11, caractérisée en ce que, immédiatement à côté d'une extrémité de l'élément séparateur extérieur (72) éloigné de l'extrémité de départ (26) de la conduite de distribution (25) et se trouvant dans sa position de départ, débouche une dérivation de conduite de retour (55a) commandée par vanne et raccordée à la conduite de retour (40a) du système de conduites (RA) d'un poste de préparation de mélange d'aliments (A), raccordée à l'extrémité de départ (26) de la conduite de distribution (25).

13. Installation d'alimentation de bétail selon la revendication 11 ou 12, caractérisée en ce que, le long de la conduite de distribution (25) sont disposés des capteurs de position (80-89) qui indiquent à l'unité centrale de commutation (90) que les éléments séparateurs (70; 71; 72) ont atteint leurs positions de travail correctes.

14. Installation d'alimentation de bétail selon l'une des revendications 11 à 13, caractérisée en ce qu'à chaque collecteur principal (14a; 14b) est associée une pompe à aliments (52a; 52b) distincte.

15. Installation d'alimentation de bétail selon la revendication 14, caractérisée en ce que chaque collecteur principal (14a; 14b) présente une conduite de dérivation (53a; 53b) commandée par vanne contournant une des pompes à aliments (52a; 52b).

16. Installation d'alimentation de bétail selon l'une des revendications 11 à 15, caractérisée en ce qu'au-dessus de chaque réservoir de pesée et de mélange (1a; 1b) est prévu un réservoir d'eau fraîche (9a; 9b) s'appuyant sur le premier et raccordé à une conduite d'amenée d'eau fraîche (10a; 10b).

17. Installation d'alimentation de bétail selon la revendication 16, caractérisée en ce que chaque réservoir à eau fraîche (9a; 9b) est raccordé, en amont de la pompe à aliments (52a; 52b), au collecteur principal (14a; 14b) de son réservoir de pesée et de mélange (1a; 1b) par l'intermédiaire d'une conduite de sortie par le fond (50a; 50b) commandée par vanne.

18. Installation d'alimentation de bétail selon l'une des revendications 11 à 17, caractérisée en ce qu'une conduite d'interconnexion (68) commandée par vanne est raccordée, en aval de la pompe à aliments (52a), au collecteur principal (14a) et en amont de la pompe à aliments (52b), à l'autre collecteur principal (14b).

19. Installation d'alimentation de bétail selon l'une des revendications 11 à 18, caractérisée en ce qu'une conduite intermédiaire de liaison (67b) commandée par vanne est raccordée à la partie supérieure d'un réservoir de pesée et de mélange (1b) et, en aval de la pompe à aliments (52b), au collecteur associé (14b).

20. Installation d'alimentation de bétail selon l'une des revendications 1 à 19, caractérisée en ce que la conduite de retour (40b) raccordée à l'extrémité (27) de la conduite de distribution (25) éloignée de l'extrémité de départ (26) de celle-ci ainsi que la dérivation de collecteur (60) se croisent en un point (64b).

21. Installation d'alimentation de bétail selon l'une des revendications 11 à 20, caractérisée en ce que les deux réservoirs intermédiaires (5a; 5b) sont reliés dans leurs régions supérieures par une conduite d'égalisation de niveau (6) et en ce qu'un des deux réservoirs intermédiaires (5a) est raccordé, dans sa région supérieure, à une conduite de trop-plein (7) conduisant à un égout (8).

22. Installation d'alimentation de bétail selon l'une des revendications 11 à 21, caractérisée en ce que pour chaque réservoir de pesée et de mélange (1a; 1b) est prévue une balance séparée (4a; 4b) connectée à l'unité centrale de commutation (90).

23. Installation d'alimentation de bétail selon l'une des revendications 11 à 22, caractérisée en ce que deux ou plus de deux postes de préparation d'aliments et de systèmes de conduites sont prévus et en ce que les sorties de leurs réservoirs de pesée et de mélange sont raccordées à une conduite de distribution commune (25) débouchant à une de ses extrémités dans deux collecteurs principaux (14a; 14b) dont un est doté de la dérivation de collecteur (60).

24. Installation d'alimentation de bétail selon l'une des revendications 11 à 23, caractérisée en ce que l'on utilise comme élément séparateur médian (71) un élément moulé qui, dans une position au moins approximativement centrale par rapport à un branchement (28 à 33), ouvre une liaison simultanée entre les deux parties voisines de la conduite de distribution (25) et le tuyau de branchement (34) conduisant à la mangeoire (35).

25. Installation d'alimentation de bétail selon la revendication 24, caractérisée en ce que l'élément séparateur médian (71) a la forme d'un élément sphérique.

26. Installation d'alimentation de bétail selon l'une des revendications 11 à 25, caractérisée en ce que l'on utilise comme pompe(s) à aliments (52a; 52b) des pompes à vis excentrique dont le débit de refoulement peut être modifié par une commande à variation de fréquence.
